# EUROPÄISCHE PATENTSCHRIFT

(11) **EP 3 600 753 B1**
(45) Veröffentlichungstag und Bekanntmachung des Hinweises auf die Patenterteilung: **11.06.2025**
(21) Anmeldenummer: 18713596.7
(22) Anmeldetag: 20.03.2018
(51) Int. Cl.: B23K 26/14

(54) **VERSCHLEISSFESTE HÜLSE FÜR EINE GASDÜSE ZUR KAPSELUNG EINES SCHNEIDGASSTRAHLS**
WEAR-RESISTANT SLEEVE FOR A GAS NOZZLE FOR ENCAPSULATING A CUTTING GAS JET
DOUILLE RÉSISTANTE À L'USURE POUR UNE BUSE À GAZ POUR L'ENCAPSULAGE D'UN JET DE GAZ DE DÉCOUPAGE

(30) Priorität: 27.03.2017 DE 102017205084
(43) Veröffentlichungstag der Anmeldung: 05.02.2020
(73) Patentinhaber: TRUMPF Werkzeugmaschinen SE + Co. KG, 71254 Ditzingen (DE)
(72) Erfinder: BEA, Martin, 70806 Kornwestheim (DE)
(74) Vertreter: Trumpf Patentabteilung
(86) Internationale Anmeldenummer: PCT/EP2018/056985
(87) Internationale Veröffentlichungsnummer: WO 2018/177804

(56) Entgegenhaltungen:
- EP-A1- 1 629 924
- WO-A1-2016/177595
- DE-U1- 202004 011 430
- US-A- 3 690 567

## Beschreibung

Die Erfindung betrifft eine Hülse für eine Gasdüse mit einem Hülsengrundkörper und mit einer Hülsenstirnfläche, die zumindest teilweise durch ein am Hülsengrundkörper befestigtes Verschleißschutzelement aus einem verschleißfesteren Material als der an die Hülsenstirnfläche angrenzende Hülsengrundkörper gebildet ist, sowie auch eine Gasdüse für einen Laserbearbeitungskopf mit einer solchen Hülse.

Eine derartige Gasdüse ist beispielsweise aus der US 9,610,652 B2 bekannt geworden.

Die Kapselung des Raums zwischen der Unterseite einer Gasdüse, insbesondere einer Schneidgasdüse, und der darunter angeordneten Werkstückoberfläche ermöglicht eine signifikante
- Reduktion der benötigten Zeit für einen Einstechprozess,
- Reduktion des Gasdrucks und dadurch Vereinfachung der erforderlichen Gas-Infrastruktur (z.B. Niederdruck- statt Hochdruckversorgung),
- Reduktion des Gasverbrauchs,
- Steigerung der Bearbeitungsgeschwindigkeit,
- Reduktion von Mikro-Rauigkeit und Grat an einer erzeugten Schnittkante.

Die aus der US 9,610,652 B2 bekannte Hülse weist einen Hülsengrundkörper auf, an dessen Hülsenstirnfläche ein hülsenförmiges Verschleißschutzelement aus elektrisch isolierendem Keramikmaterial, wie z.B. Al₂O₃, AIN, ZrO oder Al₂TiO₅, oder aus Polymermaterial befestigt ist. Das Verschleißschutzelement steht einige Millimeter über die Hülsenstirnfläche des Hülsengrundkörpers vor und bewirkt einen lokal begrenzten Schutz der Hülse gegenüber Schädigungsmechanismen wie einem Überschreiten der Schmelztemperatur oder Abrasion.

Aus der WO 2015/170029 A1 ist eine Schneidgasdüse bekannt, die zur Kapselung des Schneidgasstrahls eine bewegliche, metallische Hülse aus einer bleihaltigen Bronzelegierung aufweist. Eine solche metallische Hülse wirkt sich jedoch nachteilig auf eine kapazitive Abstandsregelung der Schneidgasdüse zur Werkstückoberfläche während des Schneidprozesses aus. Für die kapazitive Abstandsregelung agieren die Oberfläche der Schneidgasdüse und die Blechoberfläche als elektrisch leitende Oberflächen eines Kondensators, an welchen im Betrieb der Laserschneidanlage eine hochfrequente, elektrische Wechselspannung angelegt ist. Änderungen der elektrischen Feldstärke zwischen den beiden Kondensatoroberflächen werden fortlaufend gemessen und zur Einstellung des Abstandes zwischen Schneidgasdüse und Blechoberfläche verwendet ("kapazitive Abstandsregelung"). Veränderungen dieses elektrischen Feldes durch Manipulationen des Dielektrikums zwischen den Kondensatorelementen sind dabei auf ein Minimum zu beschränken, um den störungsfreien Betrieb der kapazitiven Abstandsregelung sicherzustellen.

Die aus der WO 2016/177595 A1 bekannte Hülse ist aus einem elektrisch nicht-leitenden Material, insbesondere aus Keramik oder Kunststoff, gebildet und hat daher im Fall einer Metall-Oxid-Keramik nur geringe und im Fall eines Kunststoffs keine negativen Auswirkungen auf die kapazitive Abstandsregelung, solange der verwendete Kunststoff nicht oder nur in Spuren mit dielektrisch aktiven Materialien versetzt ist. Im Betrieb der Gasdüse kann die vordere Hülsenstirnfläche in unmittelbarem, mechanischem Kontakt mit der zu bearbeitenden Werkstückoberfläche stehen, so dass die vordere Hülsenstirnfläche einem Verschleiß unterliegt.

DE 2020 04011430 U1 (Basis für den Oberbegriff des Anspruchs 1) offenbart eine Düse zum Laserschneiden mit einem Grundkörper und einer auf dem Grundkörper angeordneten Verschleißschutzschicht aus einem Schutzschicht-Material, das einen Metall-Materialanteil und einen Nichtmetall-Materialanteil umfasst. Das Schutzschicht-Material wird mittels eines physikalischen und/oder chemischen Gasphasen-Abscheideverfahren auf den Grundkörper aufgebracht.

Zu Beginn eines Laserschneidprozesses ist es erforderlich, das zu bearbeitende Werkstück mit Hilfe des fokussierten Laserstrahls zu durchbohren ("Einstechprozess"). Während dieses Einstechprozesses entweicht das durch den Laserstrahl lokal aufgeschmolzene Metall des Werkstücks entgegen der Ausbreitungsrichtung des Laserstrahls mit hoher Geschwindigkeit aus dem gerade erzeugten "Startloch". Eine Schneidgasdüse sowie die zur Kapselung des Schneidgasstrahls vorgesehene Hülse sind daher während des Einstechprozesses den aus dem Einstechloch austretenden Schmelzetröpfchen ausgesetzt.

Teile des während des Einstechprozesses verflüssigten Metalls haften außerdem auf der Werkstückoberfläche an und führen lokal zu einer erhöhen Oberflächentemperatur sowie -rauheit. Nach erfolgtem Einstechprozess wird unmittelbar in den eigentlichen Schneidbetrieb gewechselt, was dazu führt, dass die vordere Hülsenstirnfläche nach dem Einstechprozess auf die heiße und raue Werkstückoberfläche aufgesetzt und danach unter direktem mechanischen Kontakt über diese heiße und raue Werkstückoberfläche hinweg bewegt wird. Die hohe Temperatur der Werkstückoberfläche und die abrasive Wirkung der anhaftenden Metallschmelze führen sowohl beim Einsatz einer spröden Keramikhülse als auch bei einer Kunststoffhülse zu einem Verschleiß der vorderen Hülsenstirnfläche.

Während eines Laserbearbeitungsprozesses, insbesondere Schneid- oder Schweißprozesses, führen von der Werkstückoberfläche zurück reflektierte Laserstrahlung einerseits und diffus aus dem Schnittspalt bzw. dem Schmelzbad heraus emittierte, thermische Strahlung andererseits im Hülseninnern zu einer thermischen Belastung, welche zu einem Überschreiten der Schmelztemperatur und damit zu einer Zerstörung führen kann.

Der vorliegenden Erfindung liegt daher die Aufgabe zugrunde, eine alternative Hülse für eine Gasdüse anzugeben, insbesondere ohne die dielektrischen Eigenschaften der Hülse in einer für die Funktionsfähigkeit einer kapazitiven Abstandsregelung ungeeigneten Weise zu verändern.

Diese Aufgabe wird erfindungsgemäß dadurch gelöst, dass eine innere und/oder eine äußere Anlaufschräge der Hülsenstirnfläche zumindest teilweise durch das Verschleißschutzelement ausgebildet sind. Vorzugsweise sind die innere und/oder die äußere Anlaufschräge der Hülsenstirnfläche ausschließlich von dem Verschleißschutzelement ausgebildet.

Um über leichte Stufen in der Werkstückoberfläche, wie sie z.B. durch das Kippen freigeschnittener Werkstückteile auftreten können, ohne Beschädigung hinweg gleiten zu können, weist die vordere Hülsenstirnfläche eine innere und/oder eine äußere Anlaufschräge auf, die zumindest teilweise durch das Verschleißschutzelement ausgebildet ist. Das Verschleißschutzelement muss vor allem die Hülsenspitze der vorderen Hülsenstirnfläche schützen, die im Betrieb den geringsten Abstand zur Werkstückoberfläche aufweist, und erstreckt sich daher bevorzugt ausgehend von der Hülsenspitze über mindestens 2 mm, besonders bevorzugt über mindestens die Hälfte, der äußeren Anlaufschräge und bevorzugt maximal 4 mm in die Hülse hinein.

Das Verschleißschutzelement ist ring- oder rohrförmig ausgebildet, wobei das Verschleißschutzelement und der Hülsengrundkörper ineinander gesteckt sind.

Die Wandstärke des Verschleißschutzelements in einem inneren, an die Hülsenstirnfläche angrenzenden Teil des Hülsengrundkörpers ist kleiner als die halbe Wandstärke der Hülse und beträgt nicht mehr als 2 mm, insbesondere nicht mehr als 1,5 mm. Durch das möglichst dünnwandig ausgeführte Verschleißschutzelement wird die Funktion einer kapazitiven Abstandsregelung der Düse nicht beeinträchtigt. Die axiale Länge des Überlappungsbereichs zwischen dem Verschleißschutzelement und dem Hülsengrundkörper beträgt bevorzugt nicht weniger als 1 mm und nicht mehr als 3 mm. Auf diese Weise wird einerseits der innere Teil des Hülsengrundkörpers vor Streustrahlung und schmelzflüssigem Werkstückmaterial geschützt und andererseits die Funktion der Abstandsregelung nicht gestört.

Erfindungsgemäß wurde erkannt, dass ein ausreichender Schutz der Hülse vor einer Überbeanspruchung durch den Kontakt mit schmelzflüssigem Bau- oder Edelstahl sowie vor einem vermehrten Abrieb bereits erzielt werden kann, wenn nur die besonders exponierte und somit verschleißgefährdete, vordere Hülsenstirnfläche zumindest teilweise aus einem Verschleißschutzmaterial gebildet und dadurch der Hülsengrundkörper gegen einen direkten Kontakt mit dem teilweise verflüssigtem Werkstückmaterial geschützt ist. Die lokal begrenzte Modifikation der Eigenschaften der einen (vorderen) Hülsenstirnfläche ermöglicht eine signifikante Steigerung ihrer Einsatzdauer, ohne dass hierfür übergeordnete Eigenschaften der Hülse (möglichst hoher elektrischer Isolationswiderstand und dielektrische Neutralität) eingeschränkt oder gar vollständig aufgegeben werden müssen.

Für die Minimierung des unerwünschten Verschleißes sind sowohl mechanische (Zugfestigkeit/Härte) wie auch thermische (Schmelztemperatur) Werkstoffeigenschaften von Bedeutung. Das Verschleißschutzmaterial sollte daher bestmöglich den folgenden Anforderungen genügen:
- möglichst geringe negative Auswirkungen auf die Funktionsweise der kapazitiven Abstandsregelung,
- keine Kratzerbildung auf metallischen Werkstückoberflächen aufgrund der Gleitbewegung der vorderen Hülsenstirnfläche über die Werkstückoberfläche,
- möglichst hohe Form- und Abriebbeständigkeit,
- möglichst hoher Reflexionsgrad und hohe Temperaturbeständigkeit, und
- möglichst geringe Neigung zur Anhaftung von Metallspritzern.

Vorteilhaft wird ein Verschleißschutzmaterial gewählt,
- dessen Schmelztemperatur höher ist als 400 °C,
- dessen Härte sowie Elastizitätsmodul mindestens so groß sind wie die von Aluminium,
- dessen Wärmeleitfähigkeit und Reflektivität gegenüber Infrarotstrahlung mindestens so hoch sind wie die von Edelstahl, und
- dessen Neigung zur Anhaftung von Metallspritzern höchstens so groß ist wie bei Edelstahl.

Das Verschleißschutzelement ist vorzugsweise zumindest teilweise aus einem Metallmaterial, insbesondere aus einer Kupferlegierung, gebildet. Zinn-Phosphor-Bronze erfüllt in optimaler Weise die gestellten Anforderungen an die Verschleißfestigkeit, zumal der hohe Kupferanteil dieses Werkstoffs auch die thermischen Anforderungen (hohe Schmelztemperatur, geringe Anhaftung von Metallspritzern) sowie die optischen Anforderungen (hoher Reflexionsgrad) erfüllt. Gleichermaßen geeignet sind Aluminiumlegierungen, Kupfer-Tellur-Legierungen, Hart-Messing oder Metalloxid oder -nitrid.

Der Hülsengrundkörper ist vorzugsweise aus einem elektrisch nicht-leitenden Material gebildet, insbesondere aus Kunststoff oder aus Keramik (z.B. Aluminiumoxid). Es hat sich gezeigt, dass ein temperaturbeständiger, thermoplastischer Kunststoff (z.B. Polyetheretherketon (PEEK)) das geeignetste Grundmaterial für die Hülse darstellt, da Kunststoff eine höhere Elastizität als Keramik aufweist.

Wichtige Eigenschaften des eingesetzten Kunststoffs sind:
- thermoplastische Formbarkeit
- Freiheit von Füllstoffen wie Glas, Kohlenstoff, Festschmierstoffen, oder Farbpigmenten
- geringe spezifische Dichte
- hohes Zug-Elastizitäts-Modul und hohe Zugfestigkeit
- große Härte
- hohe Schmelz- und Dauergebrauchstemperatur
- hohe Wärmeleitfähigkeit
- geringe Dielektrizitätskonstante
- Nichtbrennbarkeit.

Für die Verbindung zwischen Hülsengrundkörper und Verschleißschutzelement bestehen mehrere Möglichkeiten. Eine Variante sieht vor, das Verschleißschutzelement an den Hülsengrundkörper mittels eines Klebstoffs zu kleben, der hochtemperaturbeständig und hochelastisch sein muss.

In anderen Varianten ist das Verschleißschutzelement mit dem Hülsengrundkörper form- und/oder kraftschlüssig verbunden, wobei eine gute Eignung des eingesetzten Materials für eine spanabhebende Bearbeitung oder für Umformprozesse vorteilhaft ist, um die kraft- oder formschlüssigen Verbindungen zwischen Hülsengrundkörper und Verschleißschutzelement reproduzierbar und kostengünstig realisieren zu können. Im Fall eines rohr- bzw. hülsenförmigen Verschleißschutzelements ergibt sich eine große Fügeoberfläche, über die das Verschleißschutzelement und der Hülsengrundkörper miteinander in Kontakt stehen. Hierdurch bewirken schon geringe radiale Fügespannungen eine hohe axial wirkende Gleitreibung, welche einem Herausgleiten des Verschleißschutzelements aus dem Hülsengrundkörper aufgrund der ebenfalls axial wirkenden Gravitationskraft sowie Wandschubspannungskräften der Gasströmung entgegenwirkt. Dabei ist es besonders vorteilhaft, wenn das Verschleißschutzelement an seiner äußeren Umfangsfläche einen umlaufenden, ringförmigen Vorsprung oder mehrere einzelne Vorsprünge zum Herstellen der formschlüssigen Verbindung aufweist. Der Hülsengrundkörper kann in einer weiteren Variante einen Hinterschnitt (z.B. eine Ringnut) in ihrer zylindrischen Innenfläche aufweisen, in den ein oder mehrere Vorsprünge des Verschleißschutzelements eingreifen. Diese Variante ist insbesondere geeignet, wenn der Hülsengrundkörper aus nicht-thermoplastischem Material, also z.B. aus Keramik, gebildet ist.

Um das elektromagnetische Feld zwischen Düsen- und Werkstückoberfläche, das für die kapazitive Abstandsregelung relevant ist, durch das Verschleißschutzmaterial so wenig wie möglich zu beeinflussen, soll das die vordere Hülsenstirnfläche ausbildende Verschleißschutzelement möglichst dünn bzw. dünnwandig ausgeführt und auf jene Bereiche der Hülse beschränkt sein, welche im Normalbetrieb einer permanenten thermischen Beanspruchung durch schmelzflüssige Metallspritzer (z.B. beim Einstechvorgang) sowie durch Prozessemissionen (z.B. beim Schneid- oder Schweißvorgang) bzw. einer mechanischen Beanspruchung durch Kollisionen mit der Oberfläche des Werkstücks ausgesetzt sind. Die Dicke (Wandstärke) des Verschleißschutzelements beträgt im inneren, zylindrischen Teil des Hülsengrundkörpers vorzugsweise weniger als die halbe Wandstärke des zylindrischen Teils des Hülsengrundkörpers. Im Bereich der vorderen Hülsenstirnfläche beträgt die über einen umlaufenden Bund des Hülsengrundkörpers vorstehende Dicke des Verschleißschutzelements dagegen mindestens die Hälfte, vorzugsweise etwa 2/3, der Dicke des an der vorderen Stirnfläche der Hülse umlaufenden Bundes, um ausreichende Verschleißfestigkeit sicherzustellen. Bevorzugt überdeckt das Verschleißschutzelement den umlaufenden Bund vollständig, so dass ein bestmöglicher Schutz der Hülse vor Streustrahlung oder schmelzflüssigem Werkstückmaterial erreicht wird.

Der Oberflächenanteil der Hülse, auf den der Gasdruck in einer Vorwärtsrichtung, also in Richtung auf das Werkstück, wirkt, kann 1,2 bis 1,4 mal so groß sein wie der Oberflächenteil der Hülse, auf den der Gasdruck in einer Rückwärtsrichtung, d.h. vom Werkstück weg, wirkt. Durch diese Gestaltung wird die Hülse im Betrieb der Düse vom strömenden Gas gerade so stark auf die Werkstückoberfläche gedrückt, dass sie durch die Auftriebswirkung des Gases auf die dem rückwärtigen Gasdruck zugewandten Flächenanteile der Hülse nicht von der Werkstückoberfläche abgehoben wird. Die durch den Gasdruck auf die Hülse wirkenden Auftriebs- und Anpresskräfte halten sich also gerade die Waage, so dass die Hülse möglichst reibungsfrei über die Werkstückoberfläche gleitet.

Weitere Vorteile und vorteilhafte Ausgestaltungen des Gegenstands der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fign. 1a, 1b: eine erfindungsgemäße Gasdüse in Form einer Schneidgasdüse mit einer verschiebbaren Hülse, die in Fig. 1a in ihrer vorgeschobenen, vorderen Endstellung und in Fig. 1b in einer zurückgeschobenen, hinteren Stellung gezeigt ist;
- Fign. 2a, 2b: die in Fig. 1 gezeigte zweiteilige Hülse (Fig. 2a) und im zerlegten Zustand (Fig. 2b); und
- Fign. 3 bis 6: verschiedene weitere Ausführungsformen von erfindungsgemäßen Hülsen.

In der folgenden Beschreibung der Zeichnung werden für gleiche bzw. funktionsgleiche Bauteile identische Bezugszeichen verwendet.

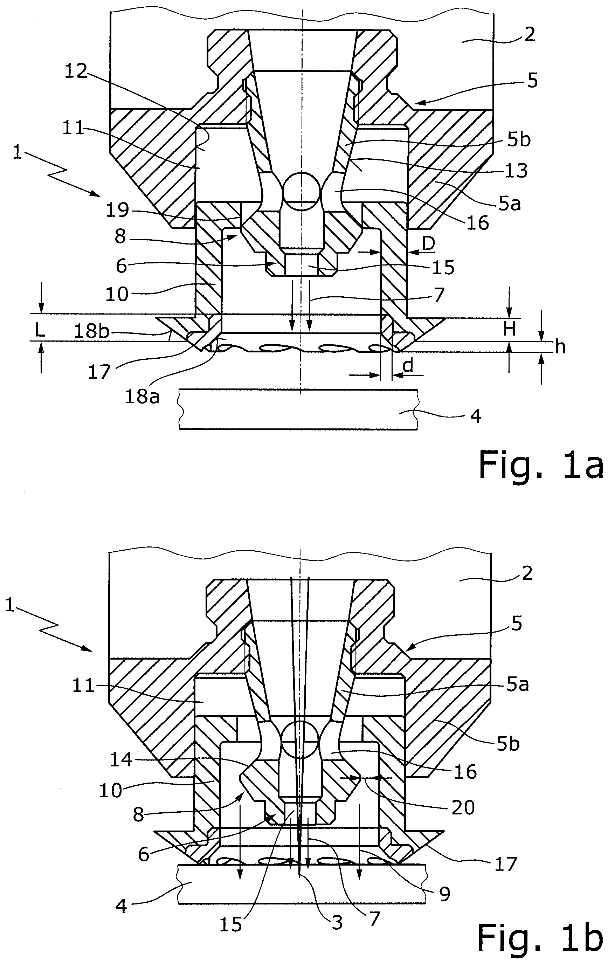

Die in **Fign. 1a, 1b** gezeigte Schneidgasdüse **1** ist an einem Laserbearbeitungskopf **2** angeordnet und dient dazu, ein Schneidgas auf ein mittels eines Laserstrahls **3** bearbeitetes Werkstück (z.B. Blech) **4** zu richten. Solche Schneidgasdüsen 1 können beispielsweise an einer Laserbearbeitungsmaschine, wie sie in der DE 10 2013 210 844 B3 offenbart ist, eingesetzt werden.

Die Schneidgasdüse 1 umfasst jeweils einen Düsenkörper **5** mit einer Innendüse **6** zur Ausbildung einer Kernströmung **7** und mit einer die Innendüse 6 umgebenden Ringspaltdüse **8** zur Ausbildung einer Ringströmung **9,** sowie eine über die Innendüse 6 vorstehende Hülse **10.** Der Düsenkörper 5 ist zweiteilig aus einem äußeren und einem inneren Düsenkörper **5a, 5b** zusammengesetzt. Die Hülse 10 ist in dem Ringspalt **11** der Ringspaltdüse 8, genauer gesagt an der Außenwand **12** des Ringspalts 11, axial vor und zurück verschiebbar geführt und in Fig. 1a in ihrer vorgeschobenen, vorderen Endstellung und in Fig. 1b in einer zurückgeschobenen, hinteren Stellung gezeigt. An der Innenwand **13** des Ringspalts 11, die durch die Außenseite der Innendüse 6 gebildet ist, ist ein Ventilsitz **14** ausgebildet, an dem die Hülse 10 in ihrer vorderen Endstellung anliegt. Die Innendüse 6 ist über ihre zentrale Düsenöffnung **15** an eine Gaszufuhr (nicht gezeigt) und der Ringspalt 11 über eine oder mehrere Verbindungsöffnungen **16** an die Düsenbohrung 15 angeschlossen. Der Laserstrahl 3 wird durch die Düsenöffnung 15 auf das Werkstück 4 gerichtet.

Um über leichte Stufen in der Werkstückoberfläche, wie sie z.B. durch das Kippen freigeschnittener Werkstückteile auftreten können, ohne Beschädigung hinweg gleiten zu können, weist die vordere Hülsenstirnfläche **17** der Hülse 10 innen- und/oder außenseitig eine Anlaufschräge **18a, 18b** auf.

In der in Fig. 1a gezeigten vorderen Endstellung ist die Hülse 10 vom Werkstück 4 beabstandet und liegt mit einem Ringbund **19** auf dem Ventilsitz 14 dichtend an, wodurch die Düsenquerschnittsfläche **20** der Ringspaltdüse 8 weitgehend verschlossen ist. Das aus dem Laserbearbeitungskopf 2 in die Schneidgasdüse 1 einströmende Schneidgas kann im Wesentlichen nur durch die zentrale Innendüse 6 als Kernströmung 7 ausströmen. Diese Einlochdüse ist beim Einstechen des Laserstrahls 3 in das Werkstück 4 oder bei der Dünnblechbearbeitung erwünscht, wenn der Laserbearbeitungskopf 2 und damit die Innendüse 6 einen großen Abstand zur Werkstückoberfläche aufweisen.

Wenn die Hülse 10 aus ihrer vorderen Endstellung in die in Fig. 1b gezeigte, hintere Stellung zurückgeschoben wird, hebt sie vom Ventilsitz 14 ab. Das Schneidgas kann über die Verbindungsöffnungen 16 in den Ringspalt 11 und von dort durch die nun freigegebene Düsenquerschnittsfläche 20 als Ringströmung 9 ausströmten. Diese Nebenstromdüse, bei der das Schneidgas sowohl aus der Innendüse 6 als auch aus der Ringspaltdüse 8 ausströmt, ist vor allem beim Schneiden dicker Werkstücke erwünscht.

Das Vorschieben der Hülse 10 in ihre vordere Endstellung erfolgt bei nicht auf das Werkstück 4 aufgesetzter Ventilhülse 10 durch den Schneidgasdruck. Das Zurückschieben der Hülse 10 erfolgt durch unterschiedlich weites Absenken der Schneidgasdüse 1 zum Werkstück 4, wodurch die Hülse 10 auf der Werkstückoberfläche aufsetzt und in eine hintere Stellung zurückgeschoben wird.

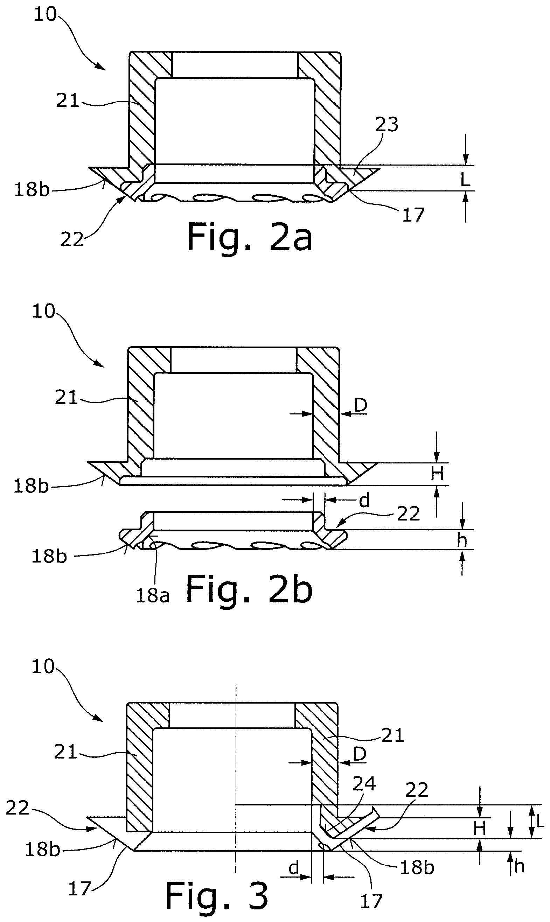

Wie in **Fign. 2a und 2b** gezeigt, weist die Hülse 10 einen Hülsengrundkörper **21** und ein daran befestigtes, ringförmiges Verschleißschutzelement **22** auf, das die vordere Hülsenstirnfläche 17 teilweise ausbildet. Alternativ können die innere und/oder die äußere Anlaufschräge 18a, 18b der Hülsenstirnfläche 17 auch ausschließlich von dem Verschleißschutzelement 22 ausgebildet sein. Der Hülsengrundkörper 21 ist aus einem elektrisch nicht-leitenden Material, insbesondere aus Kunststoff, beispielweise PEEK, oder aus Keramik, und das Verschleißschutzelement 22 aus einem verschleißfesteren Material, insbesondere aus einem Metallmaterial wie z.B. Zinn-Phosphor-Bronze, Kupfer-Tellur, Aluminium-Legierungen oder Hart-Messing, gebildet. Das Verschleißschutzelement 22 und der Hülsengrundkörper 21 sind ineinander gesteckt, wobei die Dicke (Wandstärke) **d** des Verschleißschutzelements 22 im inneren, zylindrischen Teil des Hülsengrundkörpers 21 kleiner als die halbe Wandstärke **D** der Hülse 10 ist. Bevorzugt beträgt die Wandstärke d des Verschleißschutzelements 22 nicht mehr als 2 mm, insbesondere nicht mehr als 1,5 mm, und die axiale Länge **L** des Überlappungsbereichs zwischen dem Verschleißschutzelement 22 und dem Hülsengrundkörper 21 nicht weniger als 1 mm und nicht mehr als 3 mm. Die vordere Stirnfläche 17 der Hülse 10 ist als umlaufender Bund **23** ausgebildet, und die über den Ringbund 23 vorstehende Dicke (Höhe) **h** des Verschleißschutzelements 22 entspricht mindestens der Hälfte der Dicke (Höhe) **H** des umlaufenden Bundes 23. Das Verschleißschutzelement 22, das vor allem die untere Spitze der vorderen Hülsenstirnfläche 17 ersetzt, weist die innere Anlaufschräge 18a auf und erstreckt sich ausgehend von der Hülsenspitze über mindestens 2 mm der äußeren Anlaufschräge 18b und bevorzugt maximal 4 mm in die Hülse 10 hinein. Das Verschleißschutzelement 22 ist innen in die gestufte Hülsenöffnung des Hülsenkörpers 21 z.B. mittels eines hochtemperaturbeständigen und hochelastischen Klebstoffs eingeklebt oder aufgrund entsprechender Durchmesserunterschiede zwischen Verschleißschutzelement 22 und Hülse 10 in dieser kraftschlüssig verankert.

In **Fig. 3** sind jeweils als Halbschnitte zwei weitere Hülsenvarianten gezeigt, bei denen das Verschleißschutzelement 22 an den Hülsenkörper 21 geklebt ist. Die äußere Anlaufschräge 18b ist durch das ringförmige Verschleißschutzelement 22 gebildet. Im linken Halbschnitt ist das gestufte Verschleißschutzelement 22 außen auf den Hülsenkörper 21 aufgesteckt und an die plane Stirnfläche des Hülsenkörpers 21 angeklebt. Im rechten Halbschnitt ist das Verschleißschutzelement 22 kappenförmig mit einer etwa U-förmigen Stecköffnung **24** ausgebildet, mit der es auf das Hülsenende des Hülsenkörpers 21 aufgesteckt und daran angeklebt ist.

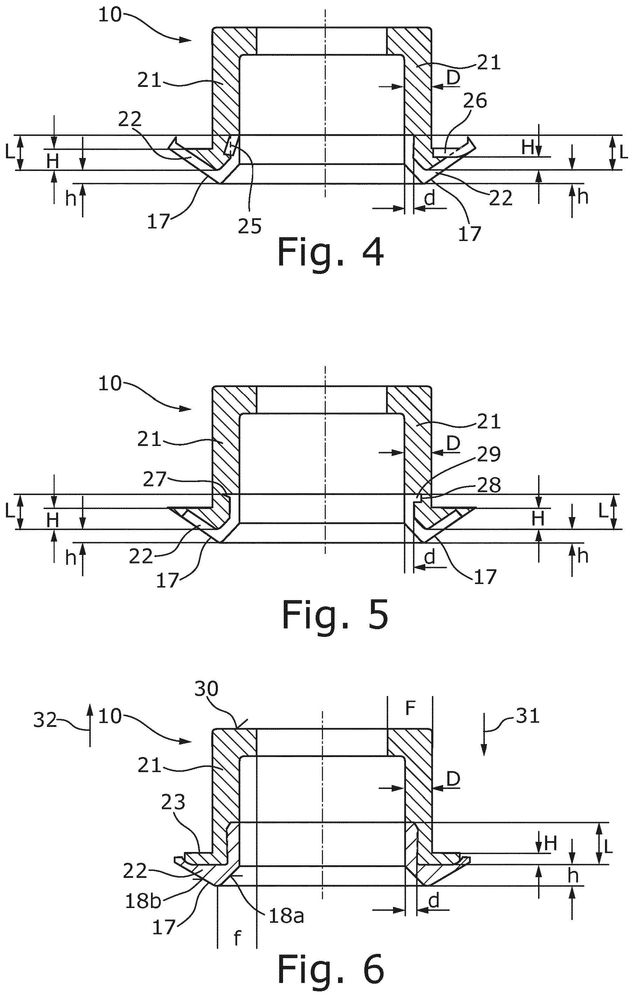

In **Fig. 4** sind jeweils als Halbschnitte zwei weitere Hülsenvarianten gezeigt, bei denen das Verschleißschutzelement 22 mit dem Hülsenkörper 21 form- und kraftschlüssig verbunden ist. Die rohrförmig-zylindrische Gestalt des Verschleißschutzelements 22 resultiert in einer großen Füge-Oberfläche, über die im zusammengesteckten Zustand das Verschleißschutzelement 22 und der Hülsenkörper 21 miteinander kraftschlüssig verbunden sind. Hierdurch bewirken schon geringe radiale Fügespannungen eine hohe axial wirkende Gleitreibung, welche einem Herausgleiten des Verschleißschutzelements 22 aus der Hülse 10 aufgrund der ebenfalls axial wirkenden Gravitationskraft sowie Wandschubspannungskräften der Schneidgasströmung entgegenwirkt. Im linken Halbschnitt weist das Verschleißschutzelement 22 an seinem inneren oberen Rand eine umlaufende oder mehrere einzelne Laschen **25** auf, die radial nach außen in eine dafür entsprechend vorgesehene, umlaufende Vertiefung in der Öffnungswandung des Hülsenkörpers 21 eingreifen und diesen dadurch hintergreifen. Im rechten Halbschnitt weist das Verschleißschutzelement 22 an seinem äußeren oberen Rand eine umlaufende oder mehrere einzelne Laschen **26** auf, die einen Außenabsatz des Hülsenkörpers 21 außen umgreifen und dadurch hintergreifen.

In der im linken Halbschnitt der **Fig. 5** gezeigten Hülsenvariante weist das Verschleißschutzelement 22 in seiner Umfangsfläche einen umlaufenden, insbesondere hakenförmigen Vorsprung **27** oder mehrere einzelne Vorsprünge auf, die in die Öffnungswandung des Hülsenkörpers 21 eingepresst werden und auf diese Weise als Widerhaken wirken. Der Außendurchmesser des bzw. der Vorsprünge 27 ist größer als der Durchmesser der Hülsenöffnung des Hülsengrundkörpers 21, so dass das Material des Hülsengrundkörpers 21 den bzw. die Vorsprünge 27 zumindest im mikroskopischen Maßstab aufgrund der durch das Einpressen induzierten Eigenspannungen umfließt. Hierdurch bildet sich eine formschlüssige Verbindung ("Hinterschnitt") mit dem bzw. den Vorsprüngen 27 aus. In der im rechten Halbschnitt der Fig. 5 gezeigten Hülsenvariante weist der Hülsengrundkörper 21 eine Ringnut **28** in seiner Öffnungswandung auf, in die ein umlaufender Vorsprung **29** oder mehrere einzelne Vorsprünge verrastend eingreifen. Diese Variante ist insbesondere geeignet, wenn das Material des Hülsengrundkörpers 21 nicht thermoplastisch, also z.B. aus Keramik ist.

Die in **Fig. 6** gezeigte Hülse 10 umfasst einen Hülsengrundkörper 21 mit einem umlaufenden Bund 23 und ein Verschleißschutzelement 22, das am umlaufenden Bund 23 befestigt ist und den umlaufenden Bund 23 an seiner Vorderseite kappenförmig abdeckt. Die über den Ringbund 23 vorstehende Dicke h des Verschleißschutzelements 22 entspricht mindestens der Hälfte der Dicke H des umlaufenden Bundes 23. Die Wandstärke d des Verschleißschutzelements 22 in einem inneren, an die Hülsenstirnfläche angrenzenden Teil des Hülsengrundkörpers 21 ist kleiner als die halbe Wandstärke D der Hülse 10 und beträgt nicht mehr als 2 mm, insbesondere nicht mehr als 1,5 mm. Die axiale Länge L des Überlappungsbereichs zwischen dem Verschleißschutzelement 22 und dem Hülsengrundkörper 21 beträgt nicht weniger als 1 mm und nicht mehr als 3 mm. Die dem Werkstück 4 abgewandte Oberfläche **30,** d.h. der Flächenanteil **F** der Hülse 10, auf den der Schneidgasdruck in einer Vorwärtsrichtung **31,** also in Richtung auf das Werkstück 4, wirkt, ist 1,2- bis 1,4 mal so groß wie der Flächenanteil **f,** auf den der Schneidgasdruck in einer Rückwärtsrichtung **32,** d.h. vom Werkstück 4 weg, wirkt.

## Patentansprüche

1. Hülse (10) für eine Gasdüse (1), mit einem Hülsengrundkörper (21) und mit einer Hülsenstirnfläche (17), die zumindest teilweise durch ein am Hülsengrundkörper (21) befestigtes Verschleißschutzelement (22) aus einem verschleißfesteren Material als der an die Hülsenstirnfläche (17) angrenzende Hülsengrundkörper (21) gebildet ist, wobei eine innere und/oder eine äußere Anlaufschräge (18a, 18b) der Hülsenstirnfläche (17) zumindest teilweise durch das Verschleißschutzelement (22) ausgebildet sind,
**dadurch gekennzeichnet,**
**dass** das Verschleißschutzelement (22) ring- oder rohrförmig ausgebildet ist, dass das Verschleißschutzelement (22) und der Hülsengrundkörper (21) ineinander gesteckt sind, und dass die Wandstärke (d) des Verschleißschutzelements (22) in einem inneren, an die Hülsenstirnfläche (17) angrenzenden Teil des Hülsengrundkörpers (21) kleiner als die halbe Wandstärke (D) der Hülse (10) ist und nicht mehr als 2 mm beträgt.

2. Hülse nach Anspruch 1, **dadurch gekennzeichnet, dass** die innere und/oder die äußere Anlaufschräge (18a, 18b) der Hülsenstirnfläche (17) ausschließlich von dem Verschleißschutzelement (22) ausgebildet sind.

3. Hülse nach einem der vorhergehenden Ansprüche, **dadurch gekennzeichnet, dass** die Wandstärke (d) des Verschleißschutzelements (22) in einem inneren, an die Hülsenstirnfläche (17) angrenzenden Teil des Hülsengrundkörpers (21) nicht mehr als 1,5 mm beträgt.

4. Hülse nach einem der vorhergehenden Ansprüche, **dadurch gekennzeichnet, dass** die axiale Länge (L) des Überlappungsbereichs zwischen dem Verschleißschutzelement (22) und dem Hülsengrundkörper (21) nicht weniger als 1 mm und nicht mehr als 3 mm beträgt.

5. Hülse nach einem der vorhergehenden Ansprüche, **dadurch gekennzeichnet, dass** das Verschleißschutzelement (22) zumindest teilweise aus einem Material gebildet ist, dessen Schmelztemperatur höher ist als 400 °C, dessen Härte sowie Elastizitätsmodul mindestens so groß sind wie die von Aluminium, dessen Wärmeleitfähigkeit und Reflektivität gegenüber Infrarotstrahlung mindestens so hoch sind wie die von Edelstahl und dessen Neigung zur Anhaftung von Metallspritzern höchstens so groß ist wie bei Edelstahl.

6. Hülse nach einem der vorhergehenden Ansprüche, **dadurch gekennzeichnet, dass** das Verschleißschutzelement (22) zumindest teilweise aus einem Metallmaterial, insbesondere aus einer Kupfer- oder Aluminiumlegierung wie z.B. Zinn-Phosphor-Bronze, Kupfer-Tellur oder Hart-Messing, oder aus einem Metalloxid oder Metallnitrid gebildet ist.

7. Hülse nach einem der vorhergehenden Ansprüche, **dadurch gekennzeichnet, dass** der Hülsengrundkörper (21) aus einem elektrisch nicht-leitenden Material, insbesondere aus Kunststoff oder Keramik, gebildet ist.

8. Hülse nach einem der vorhergehenden Ansprüche, **dadurch gekennzeichnet, dass** die Hülsenstirnfläche (17) teilweise durch einen umlaufenden Bund (23) des Hülsengrundkörpers (21) gebildet ist, an dem das Verschleißschutzelement (22) anliegt, insbesondere befestigt ist.

9. Hülse nach Anspruch 8, **dadurch gekennzeichnet, dass** die Dicke (h) des über den umlaufenden Bund (23) vorstehenden Verschleißschutzelements (22) mindestens der Hälfte der Dicke (H) des umlaufenden Bundes (23) entspricht.

10. Hülse nach Anspruch 8 oder 9, **dadurch gekennzeichnet, dass** das Verschleißschutzelement (22) den Bund (23) vollständig überdeckt.

11. Hülse nach einem der vorhergehenden Ansprüche, **dadurch gekennzeichnet, dass** das Verschleißschutzelement (22) an seiner äußeren Umfangsfläche einen ringförmigen Vorsprung oder mehrere Vorsprünge (25, 26, 27, 29) aufweist.

12. Hülse nach einem der vorhergehenden Ansprüche, **dadurch gekennzeichnet, dass** das Verschleißschutzelement (22) an den Hülsengrundkörper (21) angeklebt ist.

13. Hülse nach einem der vorhergehenden Ansprüche, **dadurch gekennzeichnet, dass** das Verschleißschutzelement (22) mit dem Hülsengrundkörper (21) form- und/oder kraftschlüssig verbunden ist.

14. Gasdüse (1) für einen Laserbearbeitungskopf (2), mit einem eine Öffnung (15) aufweisenden Düsenkörper (5) und mit einer die Öffnung (15) umgebenden Hülse (10) nach einem der vorhergehenden Ansprüche, die am Düsenkörper (5) axial vor und zurück verschiebbar geführt ist und deren vordere Hülsenstirnfläche (17) zumindest in einer vorderen Endstellung über den Düsenkörper (5) vorsteht.

## Claims

1. A sleeve (10) for a gas nozzle (1), comprising a sleeve main body (21) and comprising a sleeve end face (17) formed at least in part by a wear protection element (22) fastened on the sleeve main body (21), the wear protection element being made of a more wear-resistant material than the sleeve main body (21) adjoining the sleeve end face (17), wherein an inner and/or an outer beveled portion (18a, 18b) of the sleeve end face (17) are formed at least in part by the wear protection element (22),
**characterized in that**,
the wear protection element (22) is formed annular or tubular, that the wear protection element (22) and the sleeve main body (21) are plugged into one another, and that the wall thickness (d) of the wear protection element (22) in an inner portion of the sleeve main body (21) adjoining the sleeve end face (17) is less than half the wall thickness (D) of the sleeve (10) and not more than 2 mm.

2. The sleeve according to claim 1, **characterized in that** the inner and/or the outer beveled portion (18a, 18b) of the sleeve end face (17) are formed exclusively by the wear protection element (22).

3. The sleeve according to one of the preceding claims, **characterized in that** the wall thickness (d) of the wear protection element (22) in an inner portion of the sleeve main body (21) adjoining the sleeve end face (17) is not more than 1.5 mm.

4. The sleeve according to one of the preceding claims, **characterized in that** the axial length (L) of the overlap region between the wear protection element (22) and the sleeve main body (21) is not less than 1 mm and not more than 3 mm.

5. The sleeve according to one of the preceding claims, **characterized in that** the wear protection element (22) is formed at least in part of a material with a melting temperature higher than 400°C, a hardness and modulus of elasticity at least as great as those of aluminum, a thermal conductivity and reflectivity with respect to infrared radiation at least as great as those of stainless steel, and a tendency of adhesion of metal spatter that is at most as great as that of stainless steel.

6. The sleeve according to one of the preceding claims, **characterized in that** the wear protection element (22) is at least in part made of a metal material, in particular a copper or aluminum alloy, such as tin-phosphorous-bronze, copper-tellurium or hard brass, or is formed from a metal oxide or metal nitride.

7. The sleeve according to one of the preceding claims, **characterized in that** the sleeve main body (21) is formed from an electrically non-conducting material, in particular from a plastic or ceramic.

8. The sleeve according to one of the preceding claims, **characterized in that** the sleeve end face (17) is in part formed by a circumferential flange (23) of the sleeve main body (21), the wear protection element (22) sitting against said flange, in particular fastened thereto.

9. The sleeve according to claim 8, **characterized in that** the thickness (h) of the wear protection element (22) protruding beyond the circumferential flange (23) corresponds to at least half of the thickness (H) of the circumferential flange (23).

10. The sleeve according to claim 8 or 9, **characterized in that** the wear protection element (22) covers the flange (23) completely.

11. The sleeve according to one of the preceding claims, **characterized in that** the wear protection element (22) has an annular projection or a plurality of projections (25, 26, 27, 29) on its outer circumferential face.

12. The sleeve according to one of the preceding claims, **characterized in that** the wear protection element (22) is adhesively bonded to the sleeve main body (21).

13. The sleeve according to one of the preceding claims, **characterized in that** the wear protection element (22) is connected to the sleeve main body (21) form-lockingly and/or force-lockingly.

14. A gas nozzle (1) for a laser processing head (2), comprising a nozzle body (5) having an opening (15) and comprising a sleeve (10) according to one of the preceding claims, the sleeve surrounding the opening (15) and being guided on the nozzle body (5) axially-displaceably back and forth, and the front sleeve end face (17) of which protrudes beyond the nozzle body (5), at least in a front end position.

## Revendications

1. Douille (10) pour une buse à gaz (1), avec un corps de base de douille (21) et avec une face frontale de douille (17), laquelle est formée au moins partiellement par un élément de protection contre l'usure (22) fixé au corps de base de douille (21) et constitué d'un matériau plus résistant à l'usure que celui du corps de base de douille (21) adjacent à la face frontale de douille (17), dans laquelle un chanfrein d'approche intérieur et/ou extérieur (18a, 18b) de la face frontale de douille (17) est formé au moins partiellement par l'élément de protection contre l'usure (22),
**caractérisée en ce que**
l'élément de protection contre l'usure (22) est de forme annulaire ou tubulaire, **en ce que** l'élément de protection contre l'usure (22) et le corps de base de douille (21) sont emboîtés l'un dans l'autre, et que l'épaisseur de paroi (d) de l'élément de protection contre l'usure (22), dans une partie intérieure adjacente à la face frontale de douille (17) du corps de base de douille (21), est inférieure à la moitié de l'épaisseur de paroi (D) de la douille (10) et est d'au plus 2 mm.

2. Douille selon la revendication 1, **caractérisée en ce que** le chanfrein d'approche intérieur et/ou extérieur (18a, 18b) de la face frontale de douille (17) est formé exclusivement par l'élément de protection contre l'usure (22).

3. Douille selon l'une des revendications précédentes, **caractérisée en ce que** l'épaisseur de paroi (d) de l'élément de protection contre l'usure (22), dans une partie intérieure adjacente à la face frontale de douille (17) du corps de base de douille (21), est d'au plus 1,5 mm.

4. Douille selon l'une des revendications précédentes, **caractérisée en ce que** la longueur axiale (L) de la zone de recouvrement entre l'élément de protection contre l'usure (22) et le corps de base de douille (21) est d'au moins 1 mm et d'au plus 3 mm.

5. Douille selon l'une des revendications précédentes, **caractérisée en ce que** l'élément de protection contre l'usure (22) est formé au moins partiellement d'un matériau dont la température de fusion est supérieure à 400 °C, dont la dureté ainsi que le module d'élasticité sont au moins équivalents à ceux de l'aluminium, dont la conductivité thermique et la réflectivité au rayonnement infrarouge sont au moins aussi élevées que celles de l'acier inoxydable, et dont la tendance à l'adhérence des projections métalliques est au plus équivalente à celle de l'acier inoxydable.

6. Douille selon l'une des revendications précédentes, **caractérisée en ce que** l'élément de protection contre l'usure (22) est formé au moins partiellement d'un matériau métallique, en particulier d'un alliage de cuivre ou d'aluminium, tel que par exemple bronze étain-phosphore, cuivre-tellure ou laiton dur, ou d'un oxyde métallique ou nitrure métallique.

7. Douille selon l'une des revendications précédentes, **caractérisée en ce que** le corps de base de douille (21) est formé d'un matériau électriquement non conducteur, en particulier en matière plastique ou en céramique.

8. Douille selon l'une des revendications précédentes, **caractérisée en ce que** la face frontale de douille (17) est partiellement formée par un rebord périphérique (23) du corps de base de douille (21), sur lequel repose l'élément de protection contre l'usure (22), et auquel il est en particulier fixé.

9. Douille selon la revendication 8, **caractérisée en ce que** l'épaisseur (h) de l'élément de protection contre l'usure (22) dépassant le rebord périphérique (23) correspond au moins à la moitié de l'épaisseur (H) du rebord périphérique (23).

10. Douille selon la revendication 8 ou 9, **caractérisée en ce que** l'élément de protection contre l'usure (22) recouvre entièrement le rebord (23).

11. Douille selon l'une des revendications précédentes, **caractérisée en ce que** l'élément de protection contre l'usure (22) présente, sur sa surface périphérique extérieure, une saillie annulaire ou plusieurs saillies (25, 26, 27, 29).

12. Douille selon l'une des revendications précédentes, **caractérisée en ce que** l'élément de protection contre l'usure (22) est collé au corps de base de douille (21).

13. Douille selon l'une des revendications précédentes, **caractérisée en ce que** l'élément de protection contre l'usure (22) est assemblé au corps de base de douille (21) par liaison de forme et/ou par liaison de force.

14. Buse à gaz (1) pour une tête de traitement laser (2), avec un corps de buse (5) présentant une ouverture (15) et avec une douille (10) entourant l'ouverture (15) selon l'une des revendications précédentes, laquelle est guidée de manière axiale sur le corps de buse (5) de manière à pouvoir se déplacer d'avant en arrière, et dont la face frontale avant de douille (17) dépasse du corps de buse (5) au moins en position d'extrémité avant.
